# EUROPEAN PATENT APPLICATION

(11) **EP 2 570 998 A2**
(43) Date of publication of application: **20.03.2013**
(21) Application number: 11780822.0
(22) Date of filing: 12.05.2011
(51) Int. Cl.: G07F 11/00, G07F 17/40

(54) **VENDING MACHINE**

(30) Priority: 13.05.2010 KR 20100045021
(71) Applicant: Lee, Jeonggab, Gangnam-gu, Seoul 135-775 (KR)
(72) Inventor: Lee, Jeonggab, Gangnam-gu, Seoul 135-775 (KR)
(74) Representative: Hutter, Jacobus Johannes
(86) International application number: PCT/KR2011/003509
(87) International publication number: WO 2011/142605

(57) **Abstract**

The present invention relates to a vending machine, more specifically a vending machine that includes: a money deposit opening, into which a particular currency may be deposited; a money return opening; an input part configured to receive a user input from a user for product selection; a product dispenser opening configured to dispense a product selected by the user; and a product competition module configured to determine a ranking of products in consideration of a sales record of products during a predetermined period, and configured to perform a control to offer a benefit in correspondence to a ranking of the product selected by the user.

## Description

### [Technical Field]

The present invention relates to a vending machine, more particularly to a vending machine that conducts a competition between products.

### [Background Art]

As the labor-intensive industries of the past have evolved into the technology-oriented industries of the present, so too have the marketing environment changed, as seen by mass production, mass consumption, changes in consumer patterns, etc.

There have been demands for new types of distribution structures, and the use of automatic unmanned systems for vending products, i.e. vending machines, has increased rapidly. In a typical example, a user may insert coins or a card and select a desired product, and the vending machine would provide the product automatically.

Generally, vending machines may be installed at public facilities such as schools, government buildings, various hospitals, stadiums, railway stations, subway stations, airports, parks, etc., to sell products such as tickets, cigarettes, coffee, beverages, and the like.

The vending machine has offered solutions to many problems, including supplementing labor shortages, adapting to changes in consumer environments and consumer behaviors, providing a 24-hour unmanned vending system, allowing operation with low capital, overcoming space limitations, overcoming rises in labor costs, etc.

The current vending machine, however, simply provides the function of selling certain products from an unmanned system.

### [Disclosure]

### [Technical Problem]

An aspect of the present invention is to provide a vending machine that provides events by conducting competitions between products.

### [Technical Solution]

To achieve the objective above, an aspect of the present invention provides a vending machine that includes: a money deposit opening, into which a particular currency may be deposited; a money return opening; an input part configured to receive a user input from a user for product selection; a product dispenser opening configured to dispense a product selected by the user; and a product competition module configured to determine a ranking of products in consideration of a sales record of products during a predetermined period, and configured to perform a control to offer a benefit in correspondence to a ranking of the product selected by the user.

### [Advantageous Effects]

A vending machine according to an embodiment of the present invention can establish competition rankings based on a competition between products and provide events and benefits corresponding to the established competition ranking, to thereby create interest in the products as well as a sense of competitiveness and thus induce users to actively make purchases.

### [Description of Drawings]

FIG. 1 illustrates a vending machine operated in a product competition mode according to an embodiment of the present invention;
FIG. 2 is a block diagram schematically illustrating the composition of a product competition module in a vending machine according to an embodiment of the present invention;
FIG. 3 illustrates a display screen on a vending machine according to an embodiment of the present invention, showing the status of a product competition in the form of a graph;
FIG. 4 illustrates a screen for advertising and promoting a particular product provided by a vending machine according to an embodiment of the present invention; and
FIG. 5 illustrates a winning event screen for a vending machine according to an embodiment of the present invention.

### [Mode for Invention]

Various objectives, features, and advantages of the present invention other than those described above will be clearly understood from the detailed description of the embodiments provided below, taken with reference to the accompanying drawings.

Certain embodiments of the present invention capable of achieving the objective above will be described below in more detail with reference to the accompanying drawings. The elements and actions illustrated in the drawings and described with reference thereto are set forth only as examples and do not limit the spirit of the invention or its key elements and actions.

The terms used in this specification were selected to include current, widely-used, general terms, in consideration of the functions of the present invention. However, the terms may represent different meanings according to the intentions of the skilled person in the art or according to customary usage, the appearance of new technology, etc. In certain cases, a term may be one that was arbitrarily established by the applicant. In such cases, the meaning of the term will be defined in the relevant portion of the detailed description. As such, the terms used in the specification are not to be defined simply by the name of the terms but are to be defined based on the meanings of the terms as well as the overall description of the present invention.

In the specification, a vending machine may refer to an unmanned vendor machine where a user inserts coins or a card to purchase a product. That is, when a user inserts coins or a card into the vending machine and selects an article, the user can be provided with the selected product from the vending machine. The vending machine can be installed, for example, in a public facility such as a school, government building, hospital, stadium, railway station, subway station, airport, park, etc., to sell products such as tickets, cigarettes, coffee, beverages, and the like. Also, the vending machine can conduct a product competition between multiple products. That is, the vending machine can sell multiple products, while counting the number of sales for each of the products sold during a certain period of time. Also, the vending machine can establish the competition ranking based on the counted number of sales of each of the multiple products and provide benefits corresponding to the competition rankings.

In the specification, a benefit may refer to a separate bonus proffered in correspondence to a competition ranking determined according to a product competition. The benefit can be proffered to the user who purchased the product. For example, the benefit can be provided in the form of a particular discount, a gift, etc. The benefit can be provided differently in correspondence to the competition ranking.

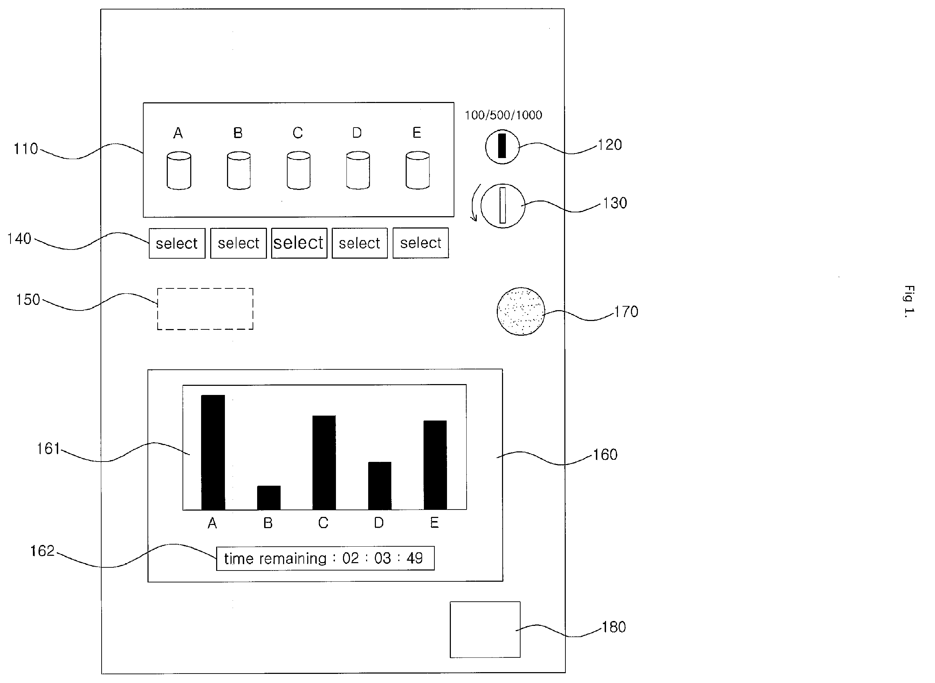

FIG. 1 illustrates a vending machine operated in a product competition mode according to an embodiment of the present invention;

As illustrated in FIG. 1, a vending machine according to an embodiment of the present invention can conduct a product competition between multiple products sold by the vending machine.

The vending machine can include a product showcase part 110, a money deposit opening 120, a money return opening 130, a selection button part 140, a product competition module 150, a display part 160, an audio output part 170, and a product dispenser opening 180.

The product showcase part 110 of the vending machine can include a space for showcasing the multiple products sold by the vending machine. That is, the vending machine can use the product showcase part 110 to showcase the multiple products sold by the vending machine, in the form of models, photographs, pictures, etc.

The money deposit opening 120 of the vending machine can receive cash or a card inserted by a particular user, and the selection button part 140 can receive an input of a selection signal for a particular product. That is, a particular user can insert cash or a card into the vending machine through the money deposit opening 120. Then, the particular user can input a selection signal by pressing on the selection button part 140 corresponding to a particular product, in order to be provided with the desired product. Then, the particular product selected by the particular user can be provided through the product dispenser opening 180. Here, the money return opening 130 can return defective coins and bills, etc., or provide change after the purchase of a product. The money deposit opening 120 can be implemented in various ways other than a means for inserting coins or a card, such as a near field communication (NFC) module that utilizes RFID (radio frequency identification), WiFi, Bluetooth, Zigbee, Infrared Data Association (IrDA) methods, etc. Thus, the vending machine can be made to support mobile phone payments, etc., using the near field communication module.

Then, the product competition module 150 equipped in the vending machine can determine the ranking of the products by considering the sales record of the products for a predetermined period, and can perform a control to provide a benefit in correspondence to the ranking of the product selected by the user. That is, the product competition module 150 can establish the competition rankings by counting each of the products sold by the vending machine, and can provide a benefit based on the established competition rankings. The product competition module 150 can count the total number of sales or the total sales value of each of the products sold by the vending machine for a predetermined duration of time. Then, the product competition module 150 can establish the competition rankings based on the total number of sales or the total sales value counted. Next, the product competition module 150 can provide a benefit corresponding to the competition ranking thus established. For example, a greater benefit can be provided for a higher competition ranking. Since the benefit is provided to the user who purchased the product, it can include providing a discount by a predetermined amount, providing a gift, etc. Here, the benefit can be provided differently in correspondence to the established competition rankings. For example, the product competition module 150 can perform a control to dispense a predetermined amount of money through the money return opening, in correspondence to the ranking of the product selected by the user. Here, the predetermined amount of money can include an accumulation amount allotted to the particular product through multiple sales. The accumulation amount can include an amount of money that can be returned when purchasing a particular product once. The accumulation amount can further include an accumulated amount in which the amount that can be returned when purchasing a particular product once is accumulated a certain number of times. Also, the product competition module 150 can perform a control to additionally dispense a predetermined number of the product selected by the user, or additionally provide a particular gift. Furthermore, the product competition module 150 can provide an environment that enables the user to purchase a particular product from among the products sold by the vending machine at a cost discounted from the sales cost of the particular product (or for free).

The product competition module 150 can output the status of a currently conducted product competition in real time, using the display part 160 and the audio output part 170 equipped in the vending machine. The display part 160 can show the product competition status using a graph 161, numbers, etc. Here, the display part 160 can further show the conducting time 162 of the product competition in a predetermined area. The audio output part 170 can provide information on the product competition status in real time using alarm sounds, voice messages, etc.

As shown above, a vending machine according to an embodiment of the present invention can be equipped with separate output devices, such as the audio output part and the display part, to provide users with the status of a product competition in real time, thereby increasing the users' incentive to participate in the product competition.

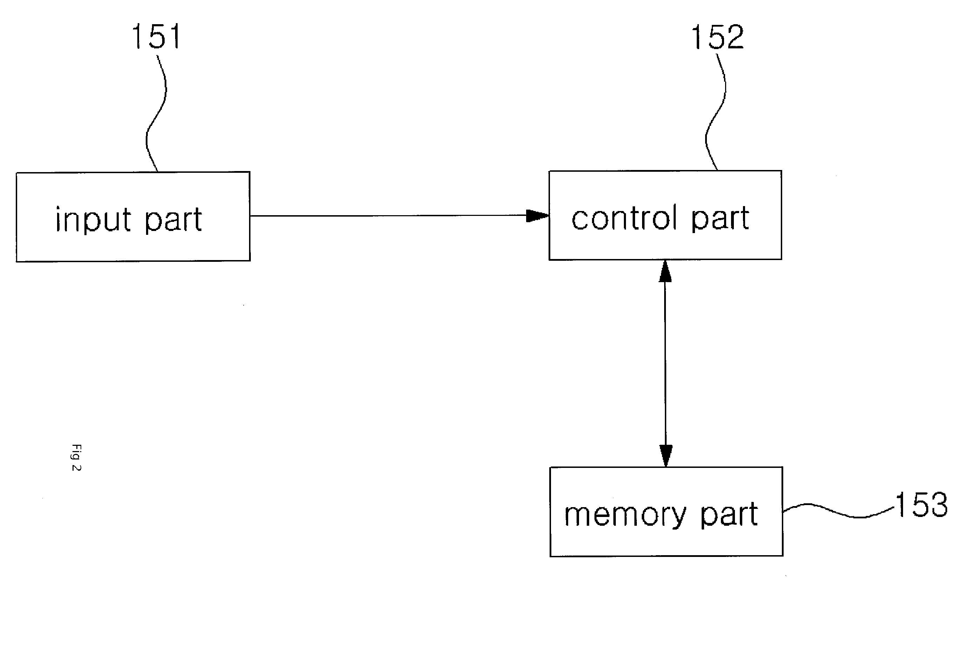

FIG. 2 is a block diagram schematically illustrating the composition of a product competition module in a vending machine according to an embodiment of the present invention;

As illustrated in FIG. 2, the product competition module of a vending machine according to an embodiment of the present invention can include an input part 151, a control part 152, and a memory part 153.

The input part 151 can receive a selection signal for a particular product. That is, a user can insert cash or a card into the vending machine selling multiple products, and then input a selection signal for selecting a particular product. Then, the input part 151 can receive the inputted selection signal.

The control part 152 can determine the rankings of products, considering the sales record of the products for a predetermined period taken by the product competition module 150 equipped in the vending machine, and can perform a control that provides a benefit in correspondence to the ranking of the product selected by the user. That is, the control part can establish the competition rankings by counting each of the products sold by the vending machine, and can offer benefits based on the established competition rankings. The control part 152 can count the total number of sales of each of the products sold by the vending machine for a predetermined duration of time. Also, the control part 152 can count the total sales value of each of the products sold by the vending machine. Then, the control part 152 can establish the competition rankings of the multiple products based on the total number of sales or the total sales value thus counted. Next, the control part 152 can provide benefits corresponding to the established competition rankings. Since the benefit is provided to the user who purchased the product, it can include providing a discount by a predetermined amount, providing a gift, etc. Here, the benefit can be provided differently in correspondence to the established competition rankings. Moreover, the control part 152 can perform a control by which to display in real time the status of the product competition between multiple products being conducted, by using an output device separately included in the vending machine. For example, the control part 152 can perform a control to dispense a predetermined amount of money through the money return opening, in correspondence to the ranking of the product selected by the user. Here, the predetermined amount of money can include an accumulation amount allotted to the particular product through multiple sales. The accumulation amount can include an amount of money that can be returned when purchasing a particular product once. Also, the control part 152 can perform a control to additionally dispense a predetermined number of the product selected by the user, or additionally provide a particular gift. Furthermore, the control part 152 can provide an environment that enables the user to purchase a particular product from among the products sold by the vending machine at a cost discounted from the sales cost of the particular product (or for free).

The control part 152 of the product competition module 150 can output in real time the status of a product competition being conducted, using the display part 160 and the audio output part 170 separately included in the vending machine. Here, the control part 152 can show the product competition status on the display part 160 by using graphs 161, numbers, etc. The control part 152 can further show the conducting time 162 of the product competition through the display part 160 in a predetermined area. Also, the control part 152 can provide information on the product competition status in real time by way of the audio output part 170 and can add to the excitement of a current situation by using alarm sounds, etc.

The memory part 153 can store the total number of sales or the total sales value, etc., of the multiple products counted by the control part 152. Also, the memory part 153 can store the established competition rankings to be used later for record keeping, etc.

As described above, a vending machine according to an embodiment of the present invention can conduct a product competition, establish competition rankings for multiple products, and provide users with benefits corresponding to the established competition rankings, to thereby arouse the users' interest and competitiveness and thus induce the users to actively make purchases.

A vending machine according to another embodiment of the present invention can conduct a competition between particular products, rather than a competition between all of the products. For example, the vending machine can conduct a competition on a one-on-one format between particular products. Also, the vending machine can alter the competition format to a survival-type format, a tournament format, etc., with a continued series of one-on-one face-offs.

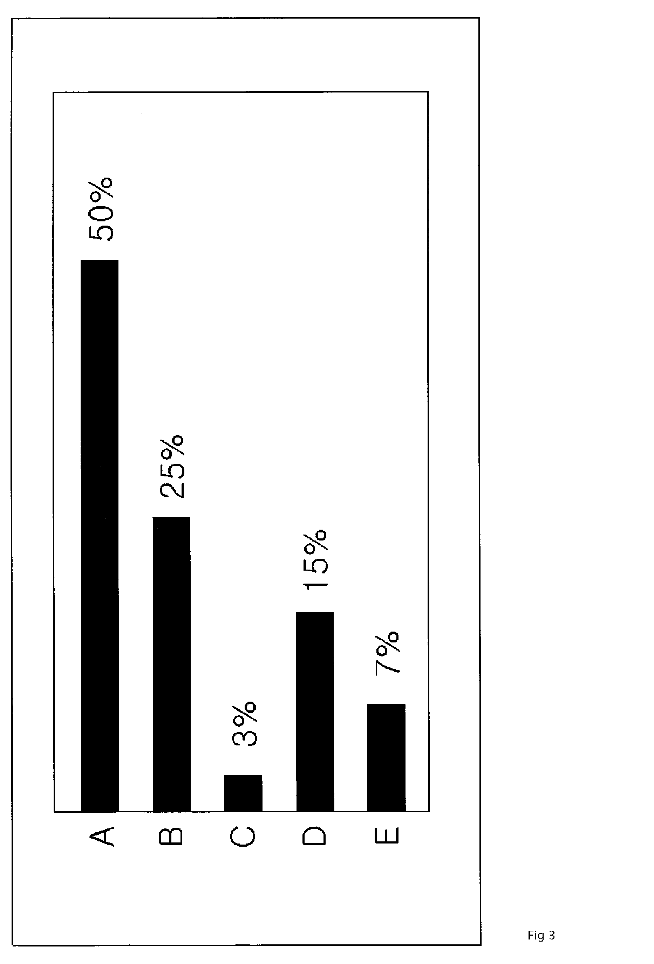

FIG. 3 illustrates a display screen on a vending machine according to an embodiment of the present invention, showing the status of a product competition in the form of a graph;

As illustrated in FIG. 3, a vending machine according to an embodiment of the present invention can provide the product competition status in real time by way of a separately included display device.

First, a particular user may insert cash or a card and select a particular product to purchase the product. Here, the product competition module (not shown) equipped in the vending machine can count the sales records of the products sold by the vending machine. The product competition module can conduct a product competition, counting the total number of sales or the total sales value of each of the products sold by the vending machine for a predetermined duration of time. Here, a display device separately included in the vending machine can display the product competition status in real time through the display device. For example, the product competition status can be shown in the form of a graph, such as that illustrated in FIG. 3. Thus, the user can refer to the screen displayed by way of the display device and easily perceive that product A is currently at ranking number 1 in the product competition with a share of 50%. Here, the benefit that will be provided upon winning the product competition or the remaining product competition time, etc., can additionally be displayed in a predetermined area of the display device.

By providing a real time status of the product competition in a graph form by way of a separate display device as described above, a vending machine according to an embodiment of the present invention allows a user to easily perceive the status of the product competition, purchase a product that places the user at an advantage, and purchase products in an enjoyable manner as if the user were enjoying a game.

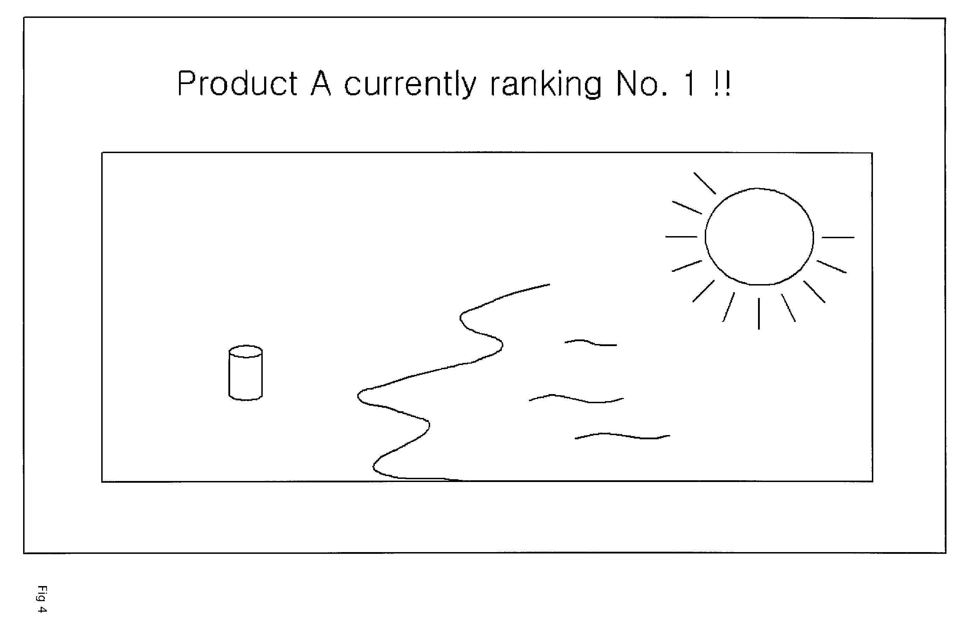

FIG. 4 illustrates a screen for advertising and promoting a particular product provided by a vending machine according to an embodiment of the present invention; and

As illustrated in FIG. 4, a vending machine according to an embodiment of the present invention can provide a screen for advertising and promoting a particular product by way of a separately included display device.

The vending machine can provide a screen for advertising and promoting particular products through the display device. A program for the advertisement and promotion can be stored in a separate storage device equipped in the vending machine. The program for the advertisement and promotion can include advertising images provided through airwave broadcasts, the results of a research performed by a particular organization, images produced by a private entity, etc. The vending machine can organize the playing times of the advertisement and promotion program to correspond to the competition rankings established according to the product competition results. For example, the vending machine can provide the advertisement for the product ranking number 1 in the competition for 30 minutes, and provide the advertisement for the product ranking number 2 in the competition for 15 minutes. The vending machine can additionally exhibit advertisements for separate sponsors on the display means.

By providing an advertisement and promotion screen for particular products on a separately included display device as described above, a vending machine according to an embodiment of the present invention can advertise a particular product and induce users to make purchases.

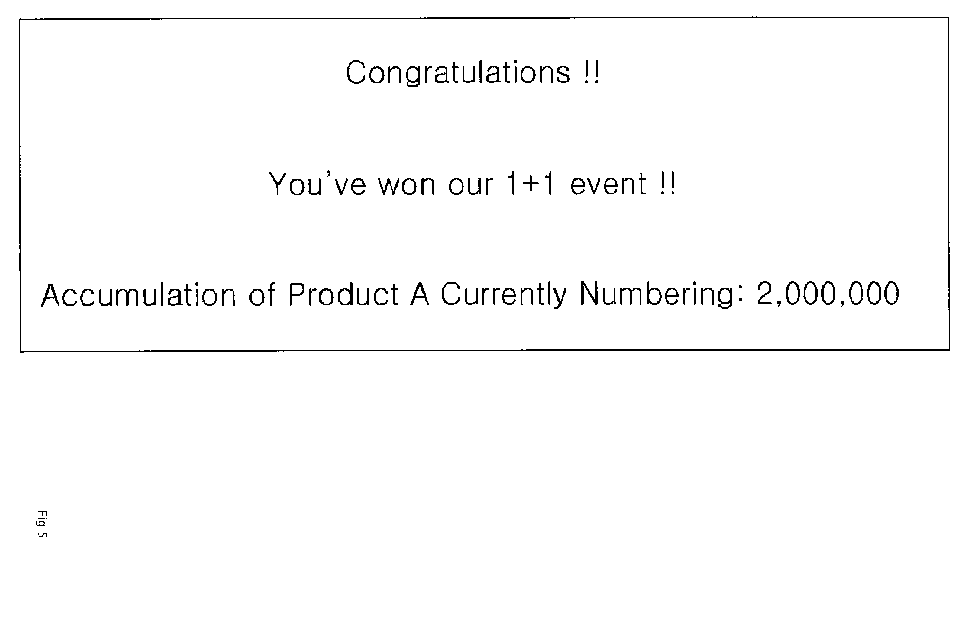

FIG. 5 illustrates a winning event screen for a vending machine according to an embodiment of the present invention.

As illustrated in FIG. 5, a vending machine according to an embodiment of the present invention can display the winning results for a particular event by way of a separately included display device.

First, a particular may insert cash or a card and select a particular product to purchase the product. Then, the particular user will be provided with the desired product.

Here, the vending machine can provide a particular event. That is, the vending machine can determine the rankings of products, considering the sales record of the products for a predetermined period, and can provide the user with a benefit corresponding to the ranking of the product selected by the user. For example, the vending machine can provide an event in which a predetermined amount of money is dispensed through the money return opening, in correspondence with the ranking of the product selected by the user. The predetermined amount of money can include an accumulation amount allotted to the particular product through multiple sales. Here, the accumulation amount can include an amount of money that can be returned when purchasing a particular product once. The accumulation amount can further include an accumulated amount in which the amount that can be returned when purchasing a particular product once is accumulated a certain number of times. Also, the vending machine can provide an event in which a predetermined number of the product selected by the user is dispensed additionally, or an event in which a particular gift is provided. Furthermore, the vending machine can provide an environment that enables the user to purchase a particular product from among the products sold by the vending machine at a cost discounted from the sales cost of the particular product (or for free). When an event is awarded, the vending machine can further provide congratulatory remarks and fanfare music, etc., through the separately included display part 160 and audio output part 170, etc., for maximum effect.

As described above, a vending machine according to an embodiment of the present invention can utilize particular events to increase the users' participation in the product competitions.

While specific implementations of the present invention have been described with reference to the drawings, the descriptions are merely to aid the understanding of the invention for those of average skill in the art, not to limit the technical scope of the invention. As such, the technical scope of the present invention is to be defined by the scope of claims, and the illustrative implementations described with reference to the drawings can be altered or modified without departing from the technical spirit and scope of the invention.

## Claims

1. A vending machine comprising:
a money deposit opening configured to receive a particular currency deposited therein;
a money return opening;
an input part configured to receive a user input from a user for product selection;
a product dispenser opening configured to dispense a product selected by the user; and
a product competition module configured to determine a ranking of products in consideration of a sales record of products during a predetermined period, and configured to perform a control to offer a benefit in correspondence to a ranking of the product selected by the user.

2. The vending machine of claim 1, wherein the control to offer a benefit performed by the product competition module comprises:
a control to dispense a predetermined amount of money in correspondence to a ranking of the product selected by the user.

3. The vending machine of claim 2, wherein the predetermined amount of money is an accumulation amount allotted to the particular product through multiple sales.

4. The vending machine of claim 1, wherein the control to offer a benefit performed by the product competition module comprises:
a control to additionally dispense a predetermined number of the product selected by the user.

5. The vending machine of claim 1, wherein the control to offer a benefit performed by the product competition module comprises:
a control to provide an environment enabling the user to purchase a particular product from among products sold by the vending machine at a discounted cost compared to a sales cost of the particular product.

6. The vending machine of claim 1, wherein the control to offer a benefit performed by the product competition module comprises:
a control to provide a particular gift to the user.
